# FASCICULE DE BREVET EUROPEEN

(11) **EP 0 630 810 B1**
(45) Date de publication et mention de la délivrance du brevet: **23.10.1996**
(21) Numéro de dépôt: 94401437.2
(22) Date de dépôt: 24.06.1994
(51) Int. Cl.: B65B 3/32, F04B 15/02, G01F 11/02

(54) **Procédé et machine distributrice pour le dosage volumétrique d'une matière pâteuse**
Verfahren und Gerät zur Volumendosierung pastöser Massen
Method and dispensing device for metering pasty matter by volume

(30) Priorité: 25.06.1993 FR 9307834
(43) Date de publication de la demande: 28.12.1994
(73) Titulaire: SOCIETE A RESPONSABILITE LIMITEE DITE DUSSAU DISTRIBUTION, F-40320 Geaune (FR); Dussau, Christian, F-40320 Geaune (FR)
(72) Inventeur: Dussau, Christian, F-40320 Geaune (FR)
(74) Mandataire: Ravina, Bernard

(56) Documents cités:
- EP-A- 0 100 481
- WO-A-85/01993
- WO-A-91/06062
- DE-A- 3 227 616
- DE-B- 1 053 394
- US-A- 5 141 408
- US-E- 29 495

## Description

La présente invention a pour objet un procédé de dosage volumique d'une quantité de matière pâteuse à distribuer et une machine distributrice d'une matière pâteuse en quantité dosée appliquant le procédé de dosage selon l'invention.
La matière pâteuse à distribuer en quantité dosée peut être une pâte alimentaire destinée, par exemple, à l'engraissement des palmipèdes (oies ou canards).

Dans le domaine du gavage des palmipèdes, il est connu d'utiliser des gaveuses automatiques composées essentiellement par une pompe doseuse aspirante refoulante comportant un conduit d'aspiration en communication lors de l'aspiration, avec une réserve de pâte et un conduit de distribution dans lequel la quantité de pâte est ensuite refoulée vers un embout de gavage monté en extrémité du conduit de distribution et intubé dans le jabot du palmipède à gaver. La pompe doseuse aspirante refoulante comprend une chambre cylindrique de dosage dans laquelle est monté en coulissement un piston entrainé par un organe moteur vers l'avant dans le sens du refoulement et vers l'arrière dans le sens de l'aspiration. La chambre de dosage comporte une paroi terminale d'obturation percée de part en part par deux orifices à l'un desquels se connecte le conduit de refoulement et à l'autre le conduit d'aspiration. Les conduits d'aspiration et de refoulement sont munis chacun d'un organe d'obturation tel que clapet anti-retour.
Une telle machine de gavage est notamment connue du brevet FR-A-429 354.
Le fonctionnement d'une telle machine est le suivant : l'organe d'obturation associé au conduit de distribution étant fermé et l'organe d'obturation associé au conduit d'aspiration étant ouvert, le piston est mû par l'organe moteur dans le sens de l'aspiration et une quantité de pâte est introduite axialement dans la chambre cylindrique de dosage. Ensuite après fermeture de l'organe d'obturation associé au conduit d'aspiration et ouverture de l'organe d'obturation associé au conduit de distribution, le piston est mû dans le sens du refoulement et la quantité de pâte préalablement introduite dans la chambre de dosage de la pompe est refoulée axialement de cette dernière vers l'embout de gavage. L'introduction de la pâte dans la chambre de dosage s'effectue progressivement au cours du mouvement arrière du piston. Le dosage de la quantité à distribuer s'effectue lors de l'aspiration et le volume de la quantité distribuée est égal en théorie au volume de la chambre de dosage lorsque le piston est au point mort arrière. Ceci suppose que la chambre de dosage se remplit totalement lors de l'aspiration. Il a été observé, avec des matières pâteuses peu fluides, un remplissage partiel de la chambre de dosage si bien que la dose distribuée ne correspond pas à la dose souhaitée. Par ailleurs le degré de remplissage de la chambre de dosage dépend du degré de fluidité de la pâte alimentaire à distribuer. Cette pâte alimentaire étant composée essentiellement d'eau et de farine, son degré de fluidité dépend directement du degré de l'absorption de l'eau par la farine qui évolue au cours du temps. Cet inconvénient se traduit par une variation de la dose distribuée si bien que les machines de l'art antérieur utilisée pour la distribution de pâte à base de farine ne permettent pas d'assurer un dosage précis et constant de la ration à délivrer.

Le jabot des palmipèdes (oies, canards) est une poche qui doit recevoir 300 ml de pâtée en début de gavage et 900 ml 12 à 15 jours plus tard. La technique du gavage consiste à développer chaque jour un peu plus cette poche pour en accroître sa capacité de manière régulière en jouant sur l'élasticité du jabot et par voie de conséquence, augmenter régulièrement la quantité de nourriture délivrée à l'animal. Il est nécessaire de veiller à ce que le gavage ne conduise pas à la distension des tissus du jabot ce qui s'avérerai nuisible à la santé de l'animal. Cette distension des tissus peut être le résultat de l'introduction d'une trop grande quantité de nourriture dans le jabot et/ou d'une trop grande vitesse d'introduction. Il est donc important de contrôler parfaitement d'une part la dose distribuée, ce que ne permet pas les machines de l'art antérieur et d'autre part la vitesse d'introduction ou de délivrance à l'animal de cette dose ou ration.
Certaines machines de l'art antérieur sont conçues pour réaliser l'introduction de matière suivant une vitesse lente. Bien que grâce à cette disposition est écarté en partie le risque de distension du jabot, il n'en demeure pas moins qu'une vitesse lente ne permet pas d'obtenir des cadences de gavage élevées.

On connaît également du document DE-A-1 053 394 un procédé et une machine de dosage mettant en oeuvre une précompression du produit avant distribution et dans la chambre de remplissage. Selon ce brevet, la précompression est réalisée par un fourreau engagé dans la chambre de remplissage. Aucun contrôle de la valeur de la précompression n'est prévu.

On connaît également du DE-A-3 227 616 un procédé et un dispositif de remplissage. Le dispostif de remplissage comprend un cylindre de remplissage avec piston pour pousser une dose de produit vers un orifice de délivrance constamment ouvert. Le procédé selon ce document prévoit une précompression préalable à la distribution du produit mais en raison de l'ouverture constante de l'orifice de délivrance la valeur de la précompression demeure faible. Par ailleurs n'est prévu aucun moyen pour contrôler la valeur de la précompression.

La présente invention a notamment pour but de résoudre les problèmes sus-évoqués en mettant en oeuvre un nouveau procédé de dosage et une machine de distribution d'une quantité dosée appliquant le dit procédé.

Le procédé, selon la présente invention, de dosage volumique d'une quantité de matière pâteuse à distribuer, dans lequel est utilisée une machine distributrice d'une matière pâteuse en quantité dosée telle qu'une pâte alimentaire, comportant une réserve de pâte à distribuer en ration dosée, au moins une pompe aspirante refoulante composée d'une chambre cylindrique dans laquelle est monté en coulissement un piston actionné par un organe moteur entre un point mort arrière et un point mort avant, la dite chambre étant pourvue d'un orifice d'admission connecté par l'intermédiaire d'un conduit d'admission à l'orifice d'évacuation de la réserve de pâte et d'un orifice de refoulement connecté par l'intermédiaire d'un conduit de refoulement à un embout de distribution d'une ration dosée de pâte, les dits orifices ou les dits conduits étant associés chacun à un moyen d'obturation pouvant prendre à la commande une position fermée suivant laquelle la section de passage de la matière pâteuse est obturée et une position ouverte suivant laquelle ladite section est libérée, se caractérise essentiellement en ce qu'il consiste, après obturation de l'orifice de refoulement du conduit associé et admission de la pâte dans la chambre de la pompe, le piston étant alors disposé suivant son point mort arrière,
- à obturer l'orifice d'admission ou son conduit associé par action sur le moyen d'obturation correspondant,
- à précomprimer progressivement la pâte dans la chambre de la pompe par poussée du piston sur la pâte afin d'obtenir une valeur de précompression égale à une valeur de consigne à partir de laquelle la pâte remplie totalement la chambre de la pompe et aucun vide n'est présent tant dans la chambre que dans la masse de la pâte,
- à ouvrir l'orifice de refoulement ou le conduit associé, par action sur le moyen d'obturation correspondant, après que la valeur de la précompression ait atteint la valeur de consigne,
- à refouler la pâte vers l'embout de distribution par mouvement du piston vers son point mort avant et simultanément à mesurer le volume de matière refoulée et comparer la valeur de cette mesure à une valeur de consigne représentative de la valeur volumique de la ration alimentaire à distribuer,
- à obturer l'orifice de refoulement ou le conduit associé par action sur le moyen d'obturation correspondant et simultanément interrompre le mouvement du piston dès que la valeur de la mesure du volume de la quantité distribuée est égale à la valeur de consigne représentative de la valeur volumique de la ration alimentaire à distribuer.

On comprend que grâce à ces dispositions, le dosage de la quantité de matière à distribuer, qui peut être une ration alimentaire destinée par exemple à l'engraissement des palmipèdes, s'effectue sur le refoulement après que la chambre de la pompe ait été entièrement remplie de matière pâteuse.

Préférentiellement, selon un autre aspect du procédé, la mesure de la quantité refoulée est opérée par mesure de la valeur du déplacement du piston dans le sens du refoulement.

Selon une autre caractéristique du procédé, la chambre de la pompe est mise sous dépression avant introduction de la matière pâteuse, cette mise en dépression étant opérée par recul du piston après obturation des orifices d'admission et de refoulement par action sur les moyens d'obturation correspondant.

Selon un autre aspect du procédé selon l'invention, le mouvement du piston vers son point mort avant est interrompu lorsque la valeur de la précompression atteint la valeur de consigne et reprend immédiatement après ouverture de l'orifice de refoulement ou du conduit associé, la dite ouverture étant opérée par action sur le moyen d'obturation correspondant.

Préférentiellement, selon un autre aspect du procédé selon l'invention, le mouvement du piston dans le sens du refoulement s'effectue d'abord suivant une vitesse rapide puis suivant une vitesse lente.

Avantageusement, suivant un autre aspect du procédé selon l'invention, le piston est entrainé suivant une vitesse rapide tant que la valeur de la mesure volumique de la matière pâteuse refoulée est inférieure à une valeur de consigne représentative de la valeur volumique de la ration alimentaire distribuée au palmipède lors de l'opération de gavage précédente.

Cette disposition permet d'améliorer la précision de dosage.

Par ailleurs, cette disposition permet des cadences de gavage élevées tout en écartant les risques de distension des tissus du jabot de l'animal. En effet, il a été observé que l'introduction à vitesse rapide de la même quantité de patée reçue par le palmipède au cours d'un gavage précédent ne peut conduire à la distension du jabot puisque ce dernier est déjà adapté à la réception de ce volume, seule la quantité de matière supplémentaire par rapport au gavage précédent est introduite à vitesse réduite, ce qui conduit à augmenter lentement la capacité du jabot sans risque de distendre les tissus.

La présente invention a également pour objet une machine pour la distribution d'une matière pâteuse en quantité dosée appliquant le procédé de dosage précédemment décrit, cette machine pouvant être une gaveuse automatique.

La machine selon l'invention pour la distribution d'une quantité dosée d'une matière pâteuse telle par exemple une ration alimentaire pour le gavage des palmipèdes, comportant une réserve de pâte à distribuer en quantité dosée, au moins une pompe aspirante refoulante composée d'une chambre cylindrique dans laquelle est montée à coulissement un piston actionné par un organe moteur entre un point mort arrière et un point mort avant, la dite chambre étant pourvue d'un orifice d'admission connecté par l'intermédiaire d'un conduit d'admission à l'orifice d'évacuation de la réserve de pâte et d'un orifice de refoulement connecté par l'intermédiaire d'un conduit de refoulement à un embout de distribution d'une quantité dosée de pâte, les dits orifices ou les dits conduits étant associés chacun à un moyen d'obturation pouvant prendre à la commande une position fermée suivant laquelle la section de passage de la matière pâteuse est obturée et une position ouverte suivant laquelle la dite section est libérée se caractérise essentiellement en ce qu'elle comporte un moyen de mesure du déplacement du piston de la pompe dans le sens du refoulement équipé d'un compteur de distance, un organe capteur de pression sensible à la pression exercée par le piston sur la pâte lors de la précompression, le dit organe capteur de pression délivrant un signal de remise à zéro du compteur lorsque la valeur de la précompression est égale à la valeur de consigne préalablement choisie, un comparateur pour comparer en continu la valeur de la distance mesurée par le compteur à une valeur de consigne préalablement choisie représentative de la valeur volumique de la dose à distribuer, le dit comparateur délivrant un signal lorsque la valeur de la distance mesurée est égale à la valeur de consigne, le dit signal étant délivré à des moyens de commande qui activent ou désactivent l'organe moteur du piston de la pompe et qui commandent les moyens d'obturation dans le sens de l'ouverture.

Selon une autre caractéristique de l'invention, le comparateur compare en continu la valeur de la distance mesurée par le compteur à une seconde valeur de consigne préalablement choisie représentative de la valeur volumique de la ration alimentaire distribuée au palmipède lors d'un gavage précédent, le dit comparateur délivrant au moyen de commande un signal lorsque la valeur mesurée est égale à la valeur de consigne, le dit moyen de commande agissant sur l'organe moteur du piston de la pompe pour réduire la vitesse de déplacement du dit piston.

D'autres avantages, caractéristiques et buts de l'invention apparaitront à la lecture de la description d'une forme préférée de réalisation donnée à titre d'exemple non limitatif en se référant aux dessins annexés en lesquels :

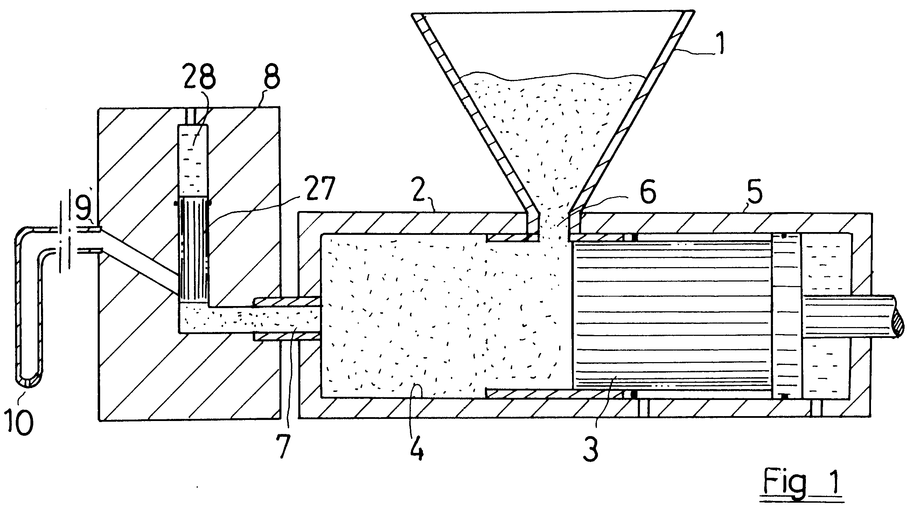

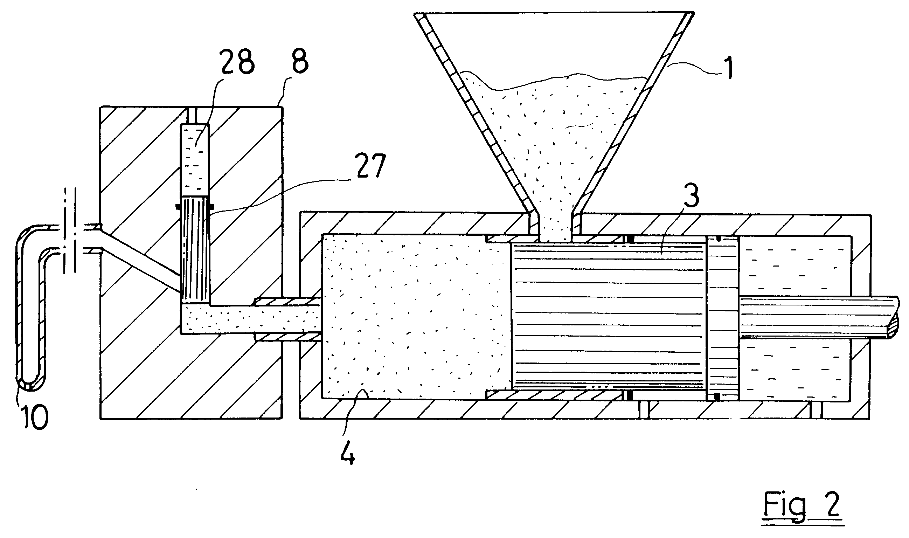

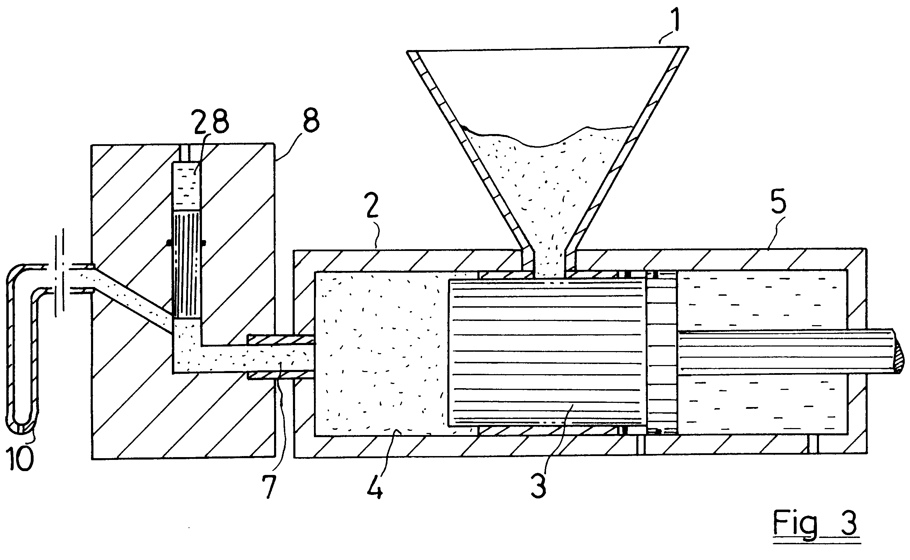

- les figures 1 à 3 illustrent le procédé selon l'invention,

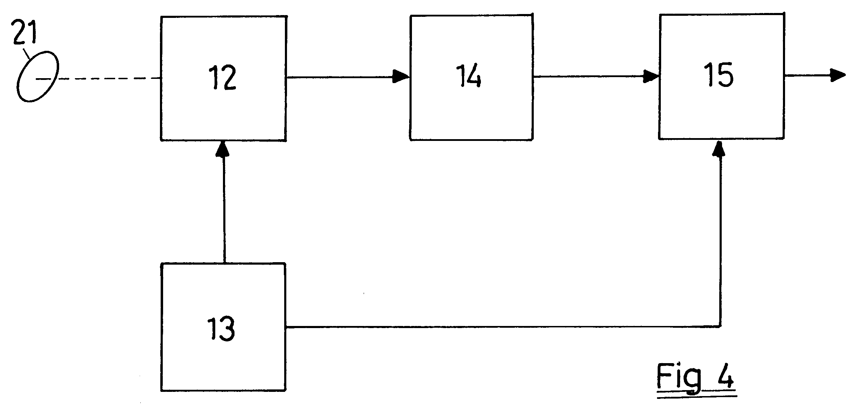

- la figure 4 est un synoptique des moyens de commande de la machine,

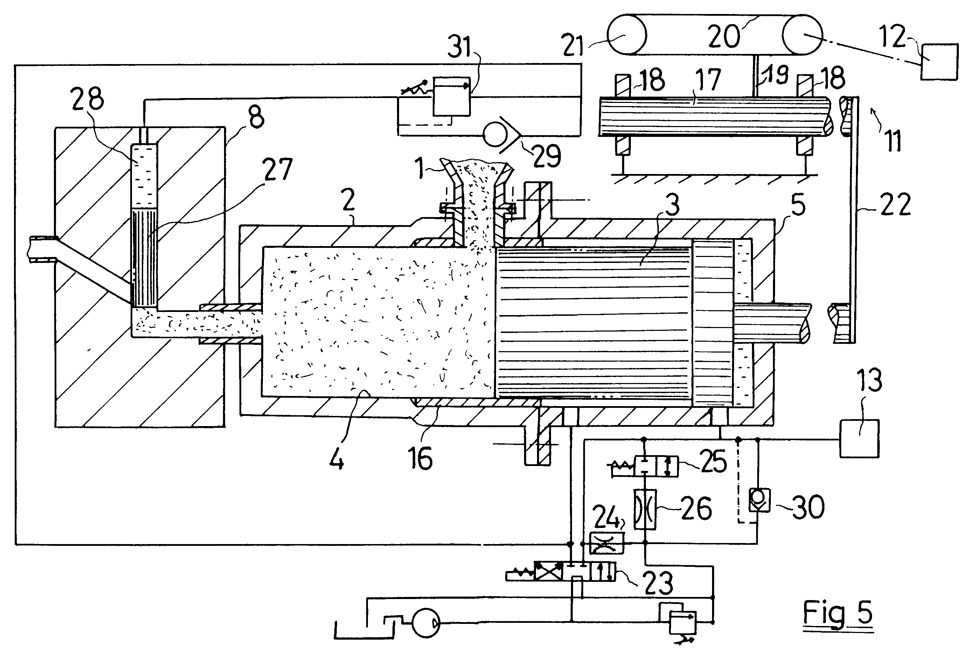

- la figure 5 est une vue schématique de la machine ainsi que de son circuit hydraulique,

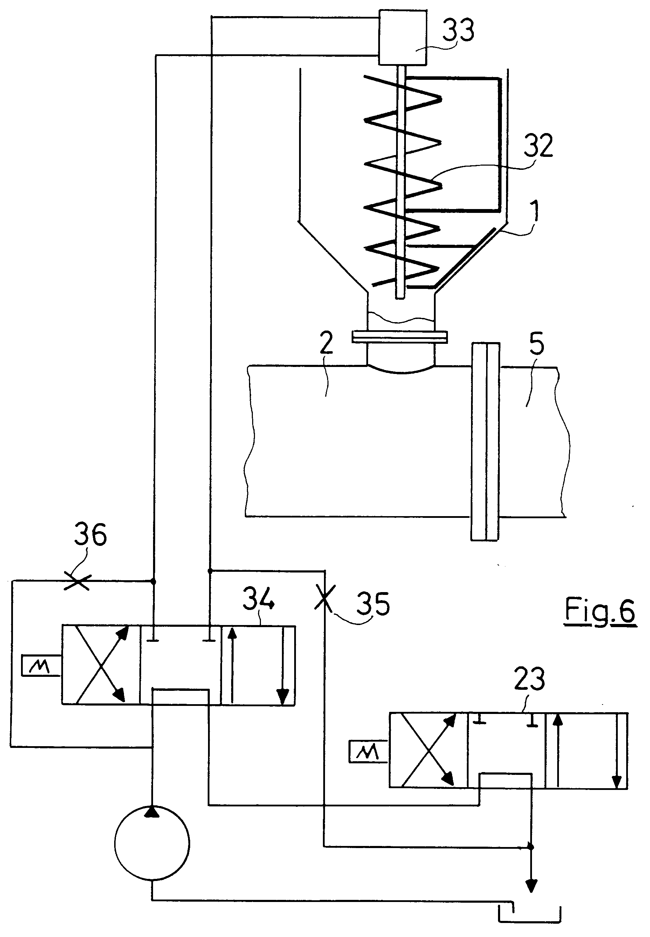

- la figure 6 est une vue partielle de la machine montrant les moyens mélangeurs de la pâte,

Telle que représentée la machine selon l'invention pour par exemple la distribution de rations alimentaires dosées avec précision à des palmipèdes à l'engraissement comprend, sur un même bâti qui peut être monté sur organes de roulement motorisés ou non, une réserve 1 de pâte, au moins une pompe aspirante refoulante 2 comportant un piston 3 actionné par un organe moteur 5 dans la chambre de dosage 4 de la pompe 2.
La pompe comporte un orifice 6 d'admission de la pâte débouchant dans la chambre 4 et disposé en relation avec un orifice d'évacuation de pâte ménagé en extrémité inférieure de la réserve. A l'orifice d'admission 6 est associé un premier moyen d'obturation. La chambre 4 cylindrique, délimitée par une enveloppe cylindrique est obturée en extrémité par une paroi transversale dans laquelle est pratiqué l'orifice de refoulement 7. Cet orifice 7 est en relation par un embout avec l'orifice d'entrée d'un second moyen d'obturation 8 comportant un orifice de sortie en relation avec le conduit de refoulement 9 lequel est terminé par un embout 10 de gavage, ce conduit de refoulement 9 étant constitué par exemple, par une portion rigide verticale connectée en extrémité inférieure au moyen d'obturation 8, par une deuxième portion rigide horizontale connectée par joint tournant à la précédente, par une troisième portion rigide horizontale connectée à la deuxième portion par un joint tournant et par une portion souple de conduite haute pression raccordée par manchon à la troisième portion rigide et comportant en extrémité l'embout de gavage 10. La portion souple pourra présenter une longueur notable.

La réserve 1 de pâte, de forme cylindro-conique par exemple, pourra être raccordée à l'orifice d'admission de la chambre 4 de la pompe par l'intermédiaire d'une conduite ou bien, selon la forme préférée de réalisation, la réserve, en partie inférieure comporte un col de raccordement qui se fixe par brides avec interposition d'éléments d'étanchéité à une tubulure de la pompe prolongeant axialement l'orifice d'admission.

L'orifice d'admission 6 peut être pratiqué dans la paroi transversale d'obturation de la chambre 4 mais selon une forme préférée de réalisation, cet orifice d'admission 6 est pratiqué dans l'enveloppe cylindrique de manière radiale à la chambre 4 et à écartement de cette dernière. Grâce à cette forme de réalisation, le moyen d'obturation de l'orifice d'admission 6 est constitué par le piston 3 de la pompe, le dit piston, suivant son point mort arrière étant disposé en arrière de l'orifice d'admission pour libérer ce dernier.

De préférence, le chambre 4 sur au moins une portion de sa longueur s'étendant de part et d'autre de l'orifice d'admission 6 présente un alésage usiné avec de faibles tolérances de fabrication. Le piston 3 est usiné avec de faibles tolérances de fabrication si bien que l'ajustage du piston dans cet alésage est effectué avec grande précision et le jeu fonctionnel entre le piston et ce dit alésage est aussi réduit que possible pour s'opposer au passage de la pâte. Cependant, ce jeu fonctionnel est suffisamment important pour permettre le passage de l'air.
Ainsi, lors de la précompression ou lors du refoulement, la pâte ne pourra pas s'infiltrer entre le piston 3 et l'alésage et refluer vers l'orifice d'admission 6 et l'air susceptible d'être contenu dans la chambre de dosage pourra s'évacuer.
Cette configuration est particulièrement avantageuse puisqu'elle évite l'emploi de joints d'étanchéité sur le piston 3 et écarte les problèmes dûs à l'usure rapide de ces joints d'étanchéité.

Selon une forme préférée de réalisation, l'alésage sus-évoqué est pratiqué dans une bague 16 qui peut être réalisée en une matière anti-friction, cette bague étant montée dans un logement annulaire de la chambre 4. La bague 16 est percée d'un orifice radial disposé en concordance avec l'orifice radial pratiqué dans l'enveloppe cylindrique et forme avec ce dernier l'orifice d'admission 6.
Avantageusement, le bord de l'orifice d'admission 6 dans la chambre est avivé, ce qui permet de réaliser avec le piston une guillotine destinée à cisailler les grains de maïs et autres éléments situés à ce niveau et véhiculés par la pâte. Il est donc possible avec une telle machine de distribuer une pâte contenant des ingrédients non broyés sans risque de coincement du piston au niveau de l'orifice d'admission.

Conformément à l'invention, la machine comporte un moyen 11 de mesure du déplacement du piston dans le sens du refoulement de la pâte, équipé d'un compteur 12 de distance, un organe capteur de pression 13, un comparateur 14 et des moyens commandes 15.

A titre d'exemple, le moyen 11 de mesure du déplacement du piston 3 dans le sens du refoulement de la matière pâteuse comprend, outre le compteur de distance 12, une tige 17 axialement guidée dans des paliers 18 parallèlement à la direction de déplacement du piston 3, la dite tige étant connectée au piston de façon à être entrainée en translation par ce dernier. En outre la tige 17 comporte un doigt radial 19 fixé à l'un des brins d'une courroie sans fin 20 tendue entre deux poulies 21 dont une est en prise avec le compteur de distance 12 lequel est constitué par un codeur incrémental. Le codeur incrémental délivre un code qui est comparé en continu par le comparateur 14 à la valeur de consigne (donnée sous forme de code) représentative de la valeur volumique de la ration à distribuer et à la valeur de consigne (donnée sous forme de code) représentative de la valeur volumique de la ration distribuée au cours d'un gavage précédent. Ces deux codes sont délivrés par tous moyens connus de l'homme de l'art. Par l'intermédiaire de ces moyens, il est possible d'afficher et de choisir ces valeurs de consigne.

D'autres moyens de mesure de distance pourront être utilisés.

Avantageusement, l'organe moteur 5 d'actionnement du piston 3 entre ses points morts avant et arrière est un vérin hydraulique, haute pression, double tige, double effet comportant une chambre avant et une chambre arrière connectées toutes deux à un circuit hydraulique haute pression, une des tiges du vérin, celle qui est dans la chambre avant de ce dernier, constituant le piston 3 de la pompe 2. Le vérin est disposé en arrière de la pompe en fixation contre l'enveloppe cylindrique de la chambre de cette dernière. La chambre avant du vérin est alimentée pour provoquer le mouvement de recul du piston de la pompe et la chambre arrière du vérin est alimentée pour provoquer la précompression et le mouvement du piston de la pompe dans le sens du refoulement.
L'utilisation d'un vérin haute pression connecté à un circuit hydraulique haute pression permet de développer une grande puissance qui contribue à améliorer la précision du dosage. Par ailleurs, l'utilisation d'une grande puissance permet de pallier les inconvénients liés aux pertes de charges et permet la distribution à grande distance de la pompe, de la ration alimentaire.

Le corps du vérin hydraulique est fixé par bride avec interposition d'éléments d'étanchéité à l'enveloppe cylindrique de la chambre 4 du piston 3.

En arrière de la bague 16, dans le corps du vérin seront disposés autour du piston 3 un ou plusieurs organes d'étanchéité connus en soi.
La tige du vérin associée à la chambre arrière de ce dernier reçoit en fixation en dehors du corps du vérin un bras 22 fixé à l'une des extrémités de la tige 17 du moyen de mesure de distance. Ce bras assure donc la transmission de mouvement entre les tiges de ce vérin et la tige 17.
Le circuit hydraulique associé au vérin 5 est par exemple, ménagé dans un bloc métallique et est commandé par les moyens 15 et comprend un distributeur hydraulique 23 à trois positions piloté électriquement et comportant une position centrale d'attente et de blocage du vérin. Ce distributeur 23 suivant la seconde position alimente la chambre avant du vérin et suivant la troisième position alimente la chambre arrière du dit vérin. Cette dernière chambre est alimentée pour réaliser d'abord la précompression et ensuite le refoulement de matière.
Lors de la précompression, la pâte sous l'effet de la poussée du piston est forcée à remplir totalement la chambre 4 et sous l'effet de la compression qu'elle subit les vides éventuellement présent dans sa masse sont amenés à se combler. Par ailleurs, si la chambre ou la masse contient des poches d'air, ces dernières sous l'effet de la précompression seront refluées vers le piston. L'évacuation de l'air de la chambre de dosage s'effectuera par passage entre l'alésage de la bague 16 et le piston 3 en direction de l'orifice d'admission 6.

L'égalité entre la valeur de précompression et la valeur de consigne est détectée par l'organe capteur de pression 13 qui est constitué par un pressostat associé à la chambre arrière du vérin 5 ou à la conduite d'alimentation de la dite chambre, le dit pressostat délivrant un signal électrique de remise à zéro au compteur de distance dès que la valeur de la pression hydraulique dans la chambre arrière du vérin est égale à sa valeur de tarage.
Le signal électrique est délivré également aux moyens 15 lesquels alors par action sur le pilote du distributeur 23 ramènent ce dernier en position centrale de blocage du vérin, dans l'attente d'un signal de remise en fonctionnement à partir duquel le distributeur 23 est ramené suivant sa seconde position pour alimenter la chambre arrière du vérin et refouler la pâte. Ce signal peut être délivré automatiquement par exemple par une temporisation ou bien par un bouton poussoir actionné par l'utilisateur. Le pressostat utilisé est de préférence réglable afin d'ajuster la valeur de consigne.
Il faut noter que le seuil de réglage de la valeur de la précompression est effectué de façon à ce qu'elle soit la plus proche possible des pertes de charge générées par le circuit de distribution de la pâte afin d'éviter au maximum les effets de variation de densité de la pâte qui peut être compressible.

A la conduite d'alimentation de la chambre arrière du vérin 5 est connecté un régulateur de débit 24, réglable qui dérive une partie du débit d'huile d'alimentation de la chambre arrière du vérin vers la réserve d'huile associée à la pompe haute pression du circuit hydraulique. Par réglage de ce limiteur de débit, il est donc possible d'ajuster la valeur de la vitesse rapide de refoulement.

Toujours à la conduite d'alimentation de la chambre arrière du vérin 5 est connectée une électrovanne 25 à laquelle se connecte un second régulateur débit 26. Lorsque l'électrovanne est activée une partie supplémentaire du débit d'huile d'alimentation de la chambre arrière du vérin 5 est dérivée vers la réserve d'huile par passage au travers du régulateur de débit 26.
L'électrovanne 25 est activée par les moyens de commande 15 lorsque la valeur donnée par le compteur 12 est égale à la valeur de consigne représentative de la valeur volumique de la ration alimentaire distribuée la veille.
Grâce à cette disposition le piston est entrainé dans le sens du refoulement suivant une vitesse plus lente que précédemment. La valeur de cette vitesse est ajustée par action sur le second régulateur de débit 26.

Lorsque la quantité désirée de matière a été distribuée, le distributeur 23 par action des moyens de commande 15 est ramené suivant sa troisième position en sorte que de l'huile sous pression soit injectée dans la chambre avant du vérin 5 pour ramener le piston 3 vers son point mort arrière. Ce mouvement de recul s'effectue après activation du moyen d'obturation 8 et fermeture de ce dernier. L'activation du moyen d'obturation 8 peut être commandée par les moyens 15.

Le recul du piston 3 place la chambre de dosage 4 de la pompe, sous dépression afin de faciliter, après dégagement de l'orifice d'admission 6 l'introduction d'une nouvelle quantité de pâte dans la chambre 4.
Afin d'augmenter la cadence de gavage, le recul du piston 3 s'effectue rapidement. Pour cette raison, le volume maximal de la chambre avant du vérin 5 est faible, le diamètre du piston étant relativement important en comparaison avec celui de la chambre avant. Ainsi, un retour rapide du piston sera obtenu avec un très faible débit d'huile.

La tige du vérin, mobile dans la chambre arrière de ce dernier, présente un diamètre faible. Ceci s'explique par la nécessité de libérer la plus grande surface de poussée du piston du vérin mais en raison de cette disposition le volume maximal de la chambre arrière est grand si bien qu'un retour rapide du piston 3 suppose que la chambre arrière du vérin puisse se vider avec rapidité. Pour cette raison, sur la conduite d'alimentation de la chambre arrière du vérin est connecté un clapet anti-retour 30 piloté à partir de la pression dans la chambre avant du vérin ou dans sa conduite d'alimentation. Lorsque la chambre avant du vérin est alimentée, le clapet anti-retour est commandé dans le sens de l'ouverture et l'huile de la chambre arrière du vérin est dirigée directement vers la réserve d'huile sans passer par le distributeur 23.

Le moyen d'obturation 8 de l'orifice de refoulement 7 peut être constitué par une électrovanne d'un type connu commandée par les moyens 15, par une vanne actionnée par vérin commandé par les moyens 15 ou par tout autre organe assurant une obturation franche interdisant tout écoulement de matière, mais préférentiellement le moyen d'obturation 8 comprend un corps pourvu d'un alésage dans lequel débouchent deux orifices dont un, le premier, est connecté à l'orifice de refoulement 7 de la pompe 2 et l'autre à la conduite de refoulement 9, le dit alésage recevant en coulissement un piston 27 pouvant occuper une position d'obturation suivant laquelle au moins le second orifice est obturé et une position de libération des dits orifices, le dit piston avec le dit alésage formant une chambre 28 connectée par une conduite hydraulique à la conduite d'alimentation de la chambre avant du vérin 5 via un clapet anti-retour 29, en sorte que lors de l'alimentation de la chambre du vérin de l'huile sous pression soit injectée au travers du clapet anti-retour dans la chambre 28 du moyen d'obturation 8 et que le piston 27 vienne obturer au moins le second orifice radial.
De préférence, les deux orifices radiaux du moyen d'obturation sont décalés axialement par rapport à l'alésage et en position d'obturation le piston n'obture que le second orifice radial.

Il y a lieu de noter que l'ajustage du piston 27 dans l'alésage est réalisé avec grande précision et que le jeu fonctionnel entre le piston et l'alésage interdit toute remontée de pâte vers la chambre 28.

Préférentiellement, il est prévu un limiteur de pression 31 connecté à la conduite d'alimentation de la chambre 28 du moyen d'obturation 8 et disposé en parallèle avec le clapet anti-retour 29, le dégagement du second orifice étant opéré par recul du piston 27 sous l'effet de la poussée de la pâte refoulée de la chambre de la pompe, ce mouvement de recul s'effectuant lorsque la pression exercée par la pâte sur le piston 27 est supérieure à la pression de tarage du limiteur de pression 31, laquelle pression de tarage est supérieure à la pression de tarage du pressostat 13 pour interdire le recul du piston 27 lors de la précompression de la pâte. De plus, le second orifice est oblique par rapport à l'axe de l'alésage tandis que le premier est perpendiculaire au dit alésage.

Grâce à ces dispositions, le piston 27 lors du refoulement de la pâte dans le conduit de refoulement maintient sur la dite pâte une pression élevée sous l'effet de laquelle l'eau absorbée par la farine est exprimée, ce qui rend la pâte plus liquide.

L'intérêt d'un tel moyen d'obturation réside également dans le fait que l'obturation s'effectue de manière automatique et très rapidement dès que la chambre avant du vérin est alimentée et dans le fait que la position d'obturation est maintenue tant que le refoulement de la pâte ne se produit pas.
Il faut par ailleurs noter que le piston 31 est amené en position d'obturation avant recul du piston 3, ce qui écarte tout risque de refluement de pâte dans la chambre de dosage 4 lors de mise en dépression de cette dernière.

En variante, le clapet anti-retour 29 pourra être remplacé par une électrovanne connectée à la conduite d'alimentation de la chambre du moyen d'obturation et disposée en parallèle avec le clapet anti-retour, le dite électrovanne étant commandée électriquement par le moyen de commande.

Préférentiellement, la machine est pourvue d'un moyen de poussée de la pâte de la réserve 1 vers la chambre de la pompe doseuse pour en combinaison avec la dépression régnant dans la dite chambre introduire rapidement la pâte dans la chambre.

Selon une première forme de réalisation le moyen de poussée est constitué par un volume de gaz sous pression confiné dans la réserve 1 au dessus de la pâte.

Selon une autre forme de réalisation, le moyen de poussée est constitué par la vis sans fin 32 d'un système mélangeur équipant la réserve 1. Ce système mélangeur a pour but d'assurer le mélange des différents composants entrant dans la composition de la pâte et comprend, outre la vis, des éléments racleurs de pâte en dépôt sur les parois conique et cylindrique de la réserve, ces éléments racleurs étant fixés à l'axe de la vis.

Par ailleurs, le système mélangeur comporte un moteur hydraulique 33 d'entrainement en rotation de la vis dans un sens ou dans l'autre. La vis est disposée verticalement, dans l'axe de l'orifice d'admission et est guidée en rotation dans des paliers. Le moteur hydraulique 33 est alimenté en fluide hydraulique par un distributeur 34 à trois positions. Le circuit hydraulique constitué par le moteur hydraulique 33, le distributeur 34 et les conduites hydrauliques associées est placé en série avec le circuit hydraulique d'alimentation du vérin 5 entre la source de pression et le dit circuit.

Le distributeur 34 suivant sa position médiane alimente directement le circuit hydraulique du vérin 5. Suivant la deuxième position du distributeur, le moteur hydraulique 33 est alimenté en huile et entraine la vis 32 suivant un sens conduisant à pousser la pâte vers le bas. Suivant la troisième position du distributeur, le moteur 33 entraine la vis en sens inverse

De façon que lorsque le distributeur 34 est disposé suivant sa position médiane la vis puisse tourner très lentement dans le sens de la poussée de la pâte vers le bas, il est prévu deux gicleurs shuntant le distributeur 34. Grâce à la présence de ces gicleurs, qui réalisent une section de fuite, le moteur hydraulique sera entrainé à grande vitesse lorsque la pression dans la chambre du vérin 5 sera élevée. On obtient une pression élevée dans cette chambre lorsque le degré de dépression dans la chambre de dosage 4 est maximal. Ainsi, peu avant le dégagement de l'orifice d'admission 6 et peu après, la pression exercée par la vis sur la pâte est maximale, ce qui facilite grandement l'introduction de la pâte dans la chambre 4.

La machine telle que décrite peut être utilisée pour le gavage des palmipèdes et plus généralement pour la distribution de quantités dosées de pâte alimentaire.

## Revendications

1. Procédé de dosage volumique d'une quantité de matière pâteuse à distribuer, dans lequel est utilisée une machine distributrice d'une matière pâteuse en quantité dosée telle qu'une pâte alimentaire, comportant une réserve (1) de pâte à distribuer en ration dosée, au moins une pompe (2) aspirante refoulante composée d'une chambre (4) cylindrique dans laquelle est monté en coulissement un piston (3) actionné par un organe moteur (5) entre un point mort arrière et un point mort avant, la dite chambre (4) étant pourvue d'un orifice d'admission (6) connecté par l'intermédiaire d'un conduit d'admission à l'orifice d'évacuation de la réserve (1) de pâte et d'un orifice de refoulement (7) connecté par l'intermédiaire d'un conduit de refoulement (9) à un embout (10) de distribution d'une ration dosée de pâte, les dits orifices (6) et (7) ou les dits conduits étant associés chacun à un moyen d'obturation pouvant prendre à la commande une position fermée suivant laquelle la section de passage de la matière pâteuse est obturée et une position ouverte suivant laquelle ladite section est libérée caractérisé en ce qu'il consiste après obturation de l'orifice (7) de refoulement ou du conduit associé et admission de la pâte dans la chambre (4) de la pompe, le piston (3) étant alors disposé suivant son point mort arrière,
- à obturer l'orifice d'admission (6) ou son conduit associé par action sur le moyen d'obturation correspondant,
- à précomprimer progressivement la pâte dans la chambre (4) de la pompe par poussée du piston (3) sur la pâte afin d'obtenir une valeur de précompression égale à une valeur de consigne à partir de laquelle la pâte remplie totalement la chambre (4) de la pompe et aucun vide n'est présent tant dans la chambre que dans la masse de la pâte.
- à ouvrir l'orifice de refoulement (7) ou le conduit associé, par action sur le moyen d'obturation correspondant, après que la valeur de la précompression ait atteint la valeur de consigne,
- à refouler la pâte vers l'embout (10) de distribution par mouvement du piston (3) vers son point mort avant et simultanément à mesurer le volume de matière refoulée et comparer la valeur de cette mesure à une valeur de consigne représentative de la valeur volumique de la ration alimentaire à distribuer,
- à obturer l'orifice de refoulement (7) ou le conduit associé par action sur le moyen d'obturation (8) correspondant et simultanément interrompre le mouvement du piston (3) dès que la valeur de la mesure du volume de la quantité distribuée est égale à la valeur de consigne représentative de la valeur volumique de la ration alimentaire à distribuer.

2. Procédé de dosage selon la revendication 1 caractérisé en ce que la mesure de la quantité refoulée est opérée par mesure de la valeur du déplacement du piston (3) dans le sens de refoulement.

3. Procédé de dosage selon la revendication 1 caractérisé en ce que la chambre de la pompe est mise sous dépression avant introduction de la matière pâteuse, cette mise en dépression étant opérée par recul du piston (3) après obturation des orifices d'admission et de refoulement par action sur les moyens d'obturation correspondant.

4. Procédé de dosage selon la revendication 1 caractérisé en ce que le mouvement du piston (3) vers son point mort avant est interrompu lorsque la valeur de la pré-compression atteint la valeur de consigne et reprend immédiatement après ouverture de l'orifice de refoulement ou du conduit associé, la dite ouverture étant opérée par action sur le moyen d'obturation correspondant.

5. Procédé de dosage selon l'une quelconque des revendications 1 à 4 caractérisé en ce que le mouvement du piston (3) dans le sens du refoulement s'effectue d'abord suivant une vitesse rapide puis suivant une vitesse lente.

6. Procédé de dosage selon la revendication 5 caractérisé en ce que le piston (3) est entrainé suivant une vitesse rapide tant que la valeur de la mesure volumique de la matière pâteuse refoulée est inférieure à une valeur de consigne représentative de la valeur volumique de la ration alimentaire distribuée aux palmipèdes lors de l'opération de gavage précédente.

7. Machine pour la distribution d'une quantité dosée d'une matière pâteuse telle par exemple une ration alimentaire pour le gavage des palmipèdes,appliquant le procédé selon les revendications 1 à 6, comportant une réserve (1) de pâte à distribuer en quantité dosée, au moins une pompe aspirante refoulante (2) composée d'une chambre (4) cylindrique dans laquelle est montée à coulissement un piston (3) actionné par un organe moteur (5) entre un point mort arrière et un point mort avant, la dite chambre (4) étant pourvue d'un orifice d'admission (6) connecté par l'intermédiaire d'un conduit d'admission à l'orifice d'évacuation de la réserve (1) de pâte et d'un orifice de refoulement connecté par l'intermédiaire d'un conduit de refoulement (9) à un embout de distribution (10) d'une quantité dosée de pâte, les dits orifices ou les dits conduits étant associés chacun à un moyen d'obturation pouvant prendre à la commande une position fermée suivant laquelle la section de passage de la matière pâteuse est obturée et une position ouverte suivant laquelle la dite section est libérée caractérisée en ce qu'elle comporte :
- un moyen de mesure (11) du déplacement du piston (3) de la pompe dans le sens du refoulement, équipé d'un compteur de distance (12),
- un organe (13) capteur de pression sensible à la pression exercée par le piston (3) sur la pâte lors de la précompression, le dit organe capteur de pression délivrant un signal de remise à zéro du compteur (12) lorsque la valeur de la précompression est égale à la valeur de consigne préalablement choisie,
- un comparateur (14) pour comparer en continu la valeur de la distance mesurée par le compteur (12) à une valeur de consigne préalablement choisie représentative de la valeur volumique de la dose à distribuer, le dit comparateur (14) délivrant un signal lorsque la valeur de la distance mesurée est égale à la valeur de consigne, le dit signal étant délivré à des moyens de commande (15) qui activent ou désactivent l'organe moteur du piston (3) de la pompe.

8. Machine pour la distribution d'une quantité dosée d'une matière pâteuse selon la revendication 7 caractérisée en ce que le comparateur (14) compare en continu la valeur de la distance mesurée par le compteur (12) à une seconde valeur de consigne préalablement choisie représentative de la valeur volumique de la ration alimentaire distribuée au palmipède lors d'un gavage précédent, le dit comparateur (14) délivrant au moyen de commande (15) un signal lorsque la valeur mesurée est égale à la valeur de consigne, le dit moyen de commande (15) agissant sur l'organe moteur (5) du piston (3) de la pompe pour réduire la vitesse de déplacement du dit piston (3).

9. Machine pour la distribution d'une quantité dosée d'une matière pâteuse selon les revendications 7 ou 8 caractérisée en ce que le moyen de mesure du déplacement du piston (3) dans le sens du refoulement de la matière pâteuse comprend une tige (17) axialement guidée dans des paliers (18), parallèlement à la direction de déplacement du piston (3), la dite tige (17) étant connectée au piston (3) de façon à être entrainée en translation par ce dernier et la dite tige (17) comportant un doigt radial (19) fixé à l'un des brins d'une courroie sans fin (20) tendue entre deux poulies (21) dont une est en prise avec le compteur de distance (12) lequel est constitué par un codeur incrémental.

10. Machine pour la distribution d'une quantité dosée d'une matière pâteuse selon la revendication 7 dont la pompe aspirante refoulante comprend une chambre cylindrique (4) délimitée par une enveloppe cylindrique obturée en extrémité avant par une paroi transversale dans laquelle est pratiqué l'orifice de refoulement caractérisé en ce que l'orifice d'admission (6) est pratiqué dans l'enveloppe cylindrique de manière radiale à la dite chambre (4) et à écartement de la paroi transversale.

11. Machine pour la distribution d'une quantité dosée d'une matière pâteuse selon la revendication 7 caractérisée en ce que la chambre (4), sur au moins une portion de sa longueur s'étendant de part et d'autre de l'orifice d'admission (6) présente un alésage usiné avec de faibles tolérances de fabrication et que le jeu fonctionnel entre le dit alésage et le piston (3) est aussi réduit que possible pour s'opposer aux passage de la pâte mais suffisamment important pour permettre le passage de l'air.

12. Machine pour la distribution d'une quantité dosée d'une matière pâteuse selon la revendication 11 caractérisée en ce que l'alésage est pratiqué dans une bague (16).

13. Machine pour la distribution d'une quantité dosée d'une matière pâteuse selon la revendication 10 caractérisée en ce que le bord de l'orifice radial d'admission (6) dans la chambre (4) est avivé.

14. Machine pour la distribution d'une quantité dosée d'une matière pâteuse selon la revendication 10 caractérisée en ce que le moyen d'obturation de l'orifice d'admission (6) est constitué par le piston (3) de la pompe (2), le dit piston (3) suivant son point mort arrière étant disposé en arrière de l'orifice d'admission (6) pour libérer ce dernier.

15. Machine pour la distribution d'une quantité dosée d'une matière pâteuse selon l'une quelconque des revendications 7 à 14 caractérisé en ce que l'organe moteur (5) d'actionnement du piston (3) entre ses points morts avant et arrière est un vérin hydraulique, haute pression, double tige, double effet, comportant une chambre avant et une chambre arrière connectées toutes deux à un circuit hydraulique haute pression, une des tiges du vérin, celle qui est dans la chambre avant de ce dernier, constituant le piston (3) de la pompe (2) et le dit vérin étant disposé en arrière de la pompe (2) en fixation contre l'enveloppe cylindrique de la chambre de cette dernière, la chambre avant (4) du vérin étant alimentée pour provoquer le mouvement de recul du piston (3) de la pompe et la chambre arrière du vérin étant alimentée pour provoquer la précompression et le mouvement du piston (3) de la pompe dans le sens du refoulement.

16. Machine pour la distribution d'une quantité dosée d'une matière pâteuse selon les revendications 7 et 15 caractérisée en ce que l'organe (13) capteur de pression est un pressostat associé à la chambre arrière du vérin (5) ou à la conduite d'alimentation de la dite chambre, le dit pressostat délivrant un signal électrique de remise à zéro au compteur de distance (12) dès que la valeur de la pression hydraulique dans la chambre arrière du vérin (5) est égale à sa valeur de tarage.

17. Machine pour la distribution d'une quantité dosée d'une matière pâteuse selon tes revendications 7 et 15 caractérisée en ce que le moyen d'obturation de l'orifice de refoulement de la pompe comprend un corps pourvu d'un alésage dans lequel débouchent deux orifices dont un, le premier, est connecté à l'orifice de refoulement de la pompe et l'autre à la conduite de refoulement, le dit alésage recevant en coulissement un piston (27) pouvant occuper une position d'obturation suivant laquelle au moins le second orifice est obturé et une position de libération des dits orifices, le dit piston (3) avec le dit alésage formant une chambre (28) connectée par une conduite hydraulique à la conduite d'alimentation de la chambre avant du vérin via un clapet anti-retour (29), en sorte que lors de l'alimentation de la chambre avant du vérin (5), de l'huile sous pression soit injectée au travers du clapet anti-retour dans la chambre (28) du moyen d'obturation (8) et que le piston (27) vienne obturer au moins le second orifice radial.

18. Machine pour la distribution d'une quantité dosée d'une matière pâteuse selon la revendication 17 caractérisée en ce que les deux orifices radiaux du moyen d'obturation (8) sont décalés axialement par rapport à l'alésage et qu'en position d'obturation, le piston (3) n'obture que le second orifice radial.

19. Machine pour la distribution d'une quantité dosée d'une matière pâteuse selon les revendications 16 et 18 caractérisée par un limiteur de pression (31) connecté à la conduite d'alimentation de la chambre (28) du moyen d'obturation (8) et disposé en parallèle avec le clapet anti-retour (29), le dégagement du second orifice étant opéré par recul du piston (27) sous l'effet de la poussée de la pâte refoulée de la chambre de la pompe, ce mouvement de recul s'effectuant lorsque la pression exercée par la pâte sur le piston (27) est supérieure à la pression de tarage du limiteur de pression (31) laquelle pression de tarage est supérieure à la pression de tarage du pressostat (13) pour interdire le recul du piston (27) lors de la précompression de la pâte.

20. Machine pour la distribution d'une quantité dosée d'une matière pâteuse selon la revendication 18 caractérisée par une électrovanne connectée à la conduite d'alimentation de la chambre (28) du moyen d'obturation et disposée en parallèle avec le clapet anti-retour (29) ladite électrovanne étant commandée électriquement par le moyen de commande (15).

21. Machine pour la distribution d'une quantité dosée d'une matière pâteuse selon la revendication 19 caractérisée en ce que le second orifice du moyen d'obturation (8) est oblique par rapport à l'axe de l'alésage tandis que le premier est perpendiculaire au dit alésage.

22. Machine pour la distribution d'une quantité dosée d'une matière pâteuse selon la revendication 7 caractérisée par un moyen de poussée de la pâte de la réserve (1) vers la chambre (4) de la pompe doseuse (2) pour, en combinaison avec la dépression régnant dans la dite chambre (4) introduire, rapidement la pâte dans la chambre (4).

23. Machine pour la distribution d'une quantité dosée d'une matière pâteuse selon la revendication 22 caractérisée en ce que le moyen de poussée est constitué par la vis sans fin motorisée (32) d'un système mélangeur équipant la réserve (1) de pâte.

24. Machine pour la distribution d'une quantité dosée d'une matière pâteuse selon la revendication 22 caractérisée en ce que le moyen de poussée est constitué par un volume de gaz sous pression confiné dans la réserve (1) au dessus de la pâte.

25. Machine pour la distribution d'une quantité dosée d'une matière pâteuse selon la revendication 23 caractérisée en ce que la vis sans fin est entrainée en rotation par un moteur hydraulique 33 associé à un distributeur hydraulique 34, que le circuit hydraulique composé par le moteur (33) et le distributeur (34) est disposé en série avec le circuit hydraulique d'alimentation du vérin (5) et que le dit distributeur (34) est shunté par deux gicleurs (35) et (36).

## Claims

1. A method for measuring out by volume a quantity of pasty material to be dispensed, in which is used a machine for dispensing a measured quantity of a pasty material such as a feed paste, comprising a reserve (1) of paste to be dispensed in a measured ration, at least one suction pump (2) composed of a cylindrical chamber (4) in which is mounted a sliding piston (3) actuated by a motor member (5) between a rear dead centre and a front dead centre, said chamber (4) being provided with an inlet orifice (6) connected via an inlet conduit to the discharge orifice of the reserve (1) of paste and with a delivery orifice (7) connected via a delivery conduit (9) to a nozzle (10) for dispensing a measured ration of paste, said orifices (6) and (7) or said conduits each being associated with an obturating means that can, when commanded, assume a closed position in which the section through which the pasty material can pass is obturated and an open position in which said section is unblocked, characterised in that it consists, after obturation of the delivery orifice (7) or the associated conduit and admission of the paste in the chamber (4) of the pump, the piston (3) then being disposed at its rear dead centre,
- in obturating the inlet orifice (6) or its associated conduit by acting on the corresponding obturating means,
- in progressively precompressing the paste in the chamber (4) of the pump by the pushing of the piston (3) on the paste in order to obtain a precompression value equal to a desired value on the basis of which the paste completely fills the chamber (4) of the pump and there is no empty space either in the chamber or in the mass of the paste,
- in opening the delivery orifice (7) of the associated conduit, by acting on the corresponding obturating means, after the precompression value has reached the desired value,
- in delivering the paste towards the dispensing nozzle (10) by moving the piston (3) towards its front dead centre and simultaneously measuring the volume of material delivered and comparing the value of this measurement with a desired value representing the value by volume of the food ration to be dispensed,
- in obturating the delivery orifice (7) or the associated conduit by acting on the corresponding obturating means (8) and simultaneously interrupting the movement of the piston (3) as soon as the value of the measurement of the volume of the quantity dispensed is equal to the desired value representing the value by volume of the food ration to be dispensed.

2. A method for measuring out according to Claim 1 characterised in that the measurement of the quantity delivered is made by measuring the value of the displacement of the piston (3) in the direction of delivery.

3. A method for measuring out according to Claim 1 characterised in that the chamber of the pump is placed in a partial vacuum before introduction of the pasty material, this partial vacuum being produced by the backward movement of the piston (3) after obturation of the inlet and delivery orifices by acting on the corresponding obturating means.

4. A method for measuring out according to Claim 1, characterised in that the movement of the piston (3) towards its front dead centre is interrupted when the precompression value reaches the desired value and is resumed immediately after the opening of the delivery orifice or the associated conduit, said opening being produced by acting on the corresponding obturating means.

5. A method for measuring out according to any one of Claims 1 to 4 characterised in that the movement of the piston (3) in the direction of delivery is effected first at a fast speed and then at a slow speed.

6. A method for measuring out according to Claim 5 characterised in that the piston (3) is driven at a fast speed for as long as the value of the measurement of the volume of the pasty material being delivered is below a desired value representing the value by volume of the food ration dispensed to the palmipeds during the preceding force-feeding operation.

7. A machine for dispensing a measured quantity of a pasty material such as a food ration for force-feeding palmipeds, applying the method according to Claims 1 to 6, comprising a reserve (1) of paste to be dispensed in a measured ration, at least one suction pump (2) composed of a cylindrical chamber (4) in which is mounted a sliding piston (3) actuated by a motor member (5) between a rear dead centre and a front dead centre, said chamber (4) being provided with an inlet orifice (6) connected via an inlet conduit to the discharge orifice of the reserve (1) of paste and with a delivery orifice connected via a delivery conduit (9) to a nozzle (10) for dispensing a measured quantity of paste, said orifices or said conduits each being associated with an obturating means that can, when commanded, assume a closed position in which the section through which the pasty material can pass is obturated and an open position in which said section is unblocked, characterised in that it comprises:
- a means (11) for measuring the displacement of the piston (3) of the pump in the direction of delivery, equipped with a distance meter (12),
- a pressure sensing member (13) sensitive to the pressure exerted by the piston (3) on the paste at the time of precompression, said pressure sensing member supplying a signal for resetting the meter (12) to zero when the precompression value is equal to the desired value previously chosen,
- a comparator (14) for continuously comparing the value of the distance measured by the meter (12) with a desired value previously chosen, representing the value by volume of the measured amount to be dispensed, said comparator (14) supplying a signal when the value of the distance measured is equal to the desired value, said signal being supplied to control means (15) that activate or deactivate the motor member of the piston (3) of the pump.

8. A machine for dispensing a measured quantity of pasty material according to Claim 7, characterised in that the comparator (14) continuously compares the value of the distance measured by the meter (12) with a second desired value, previously chosen, representing the value by volume of the food ration dispensed to the palmiped during the previous force-feeding, said comparator (14) supplying a signal to the control means (15) when the measured value is equal to the desired value, said control means (15) acting on the motor member (5) of the piston (3) of the pump in order to reduce the displacement speed of said piston (3).

9. A machine for dispensing a measured quantity of a pasty material according to Claims 7 or 8 characterised in that the means for measuring the displacement of the piston (3) in the direction of delivery of the pasty material comprises a rod (17) guided axially in bearings (18), parallel to the direction of displacement of the piston (3), said rod (17) being connected to the piston (3) so as to be driven in translation by the latter and said rod (17) comprising a radial pin (19) fixed to one of the sides of an endless belt (20) stretched between two pulleys (21), one of which is engaged with the distance meter (12) which is constituted by an incremental encoder.

10. A machine for dispensing a measured quantity of a pasty material according to Claim 7, in which the suction pump comprises a cylindrical chamber (4) delimited by a cylindrical casing obturated at the front end by a transverse wall in which the delivery orifice is formed, characterised in that the inlet orifice (6) is formed in the cylindrical casing so as to be radial to said chamber (4) and at a distance from the transverse wall.

11. A machine for dispensing a measured quantity of a pasty material according to Claim 7, characterised in that the chamber (4), over at least one portion of its length extending on either side of the inlet orifice (6), has a bore machined with low manufacturing tolerances and that the functional play between said bore and the piston (3) is as little as possible in order to oppose the passage of the paste but great enough to allow the passage of air.

12. A machine for dispensing a measured quantity of a pasty material according to Claim 11 characterised in that the bore is formed in a ring (16).

13. A machine for dispensing a measured quantity of a pasty material according to Claim 10, characterised in that the edge of the radial inlet orifice (6) in the chamber (4) is burnished.

14. A machine for dispensing a measured quantity of a pasty material according to Claim 10, characterised in that the means for obturating the inlet orifice (6) is constituted by the piston (3) of the pump (2), said piston (3) at its rear dead centre being disposed behind the inlet orifice (6) so as to unblock the latter.

15. A machine for dispensing a measured quantity of a pasty material according to any one of Claims 7 to 14 characterised in that the motor member (5) for actuating the piston (3) between its front and rear dead centres is a high-pressure, double-rod, double-effect hydraulic jack comprising a front chamber and a rear chamber both connected to a high-pressure hydraulic circuit, one of the rods of the jack, the one that is in the front chamber of the latter, constituting the piston (3) of the pump (2) and said jack being disposed behind the pump (2) and fixed to the cylindrical casing of the chamber of the latter, the front chamber (4) of the jack being supplied so as to cause the backward movement of the piston (3) of the pump and the rear chamber of the jack being supplied to as to cause the precompression and movement of the piston (3) of the pump in the direction of delivery.

16. A machine for dispensing a measured quantity of pasty material according to Claims 7 and 15 characterised in that the pressure sensing member (13) is a pressure-sensitive switch associated with the rear chamber of the jack (5) or with the supply conduit of said chamber, said pressure-sensitive switch supplying an electrical signal to reset to zero the distance meter (12) as soon as the value of hydraulic pressure in the rear chamber of the jack (5) is equal to its calibration value.

17. A machine for dispensing a measured quantity of a pasty material according to Claims 7 and 15 characterised in that the means for obturating the delivery orifice of the pump comprises a body provided with a bore into which open two orifices, one of which, the first, is connected to the delivery orifice of the pump and the other to the delivery conduit, said bore receiving a sliding piston (27) that can occupy an obturating position in which at least the second orifice is obturated and a position where said orifices are unblocked, said piston (3) together with said bore forming a chamber (28) connected by a hydraulic conduit to the supply conduit of the front chamber of the jack via a non-return valve (29), such that when the front chamber of the jack (5) is being supplied, oil under pressure is injected through the non-return valve into the chamber (28) of the obturating means (8) and that the piston (27) obturates at least the second radial orifice.

18. A machine for dispensing a measured quantity of a pasty material according to Claim 17, characterised in that the two radial orifices of the obturating means (8) are offset axially in relation to the bore and that, in the obturating position, the piston (3) obturates only the second radial orifice.

19. A machine for dispensing a measured quantity of a pasty material according to Claims 16 and 18, characterised by a pressure limiter (31) connected to the conduit for supplying the chamber (28) of the obturating means (8) and disposed in parallel with the non-return valve (29), the clearing of the second orifice being operated by the backward movement of the piston (27) under the effect of the pushing of the paste that is delivered from the chamber of the pump, this backward movement being effected when the pressure exerted by the paste on the piston (27) is greater than the calibration pressure of the pressure limiter (31), which calibration pressure is greater than the calibration pressure of the pressure-sensitive switch (13) in order to prevent the backward movement of the piston (27) during the precompression of the paste.

20. A machine for dispensing a measured quantity of a pasty material according to Claim 18, characterised by an electro-valve connected to the supply conduit of the chamber (28) of the obturating means and disposed parallel to the non-return valve (29), said electro-valve being controlled electrically by the control means (15).

21. A machine for dispensing a measured quantity of a pasty material according to Claim 19, characterised in that the second orifice of the obturating means (8) is oblique in relation to the axis of the bore while the first one is perpendicular to said bore.

22. A machine for dispensing a measured quantity of a pasty material according to Claim 7 characterised by a means for pushing the paste in the reserve (1) towards the chamber (4) of the measuring pump (2) in order to introduce the paste into the chamber (4) quickly, in combination with the partial vacuum prevailing in said chamber (4).

23. A machine for dispensing a measured quantity of a pasty material according to Claim 22, characterized in that the pushing means is constituted by the motorized endless screw (32) of a mixing system fitted to the reserve (1) of paste.

24. A machine for dispensing a measured quantity of a pasty material according to Claim 22 characterized in that the pushing means is constituted by a volume of gas under pressure confined in the reserve (1) above the paste.

25. A machine for dispensing a measured quantity of a pasty material according to Claim 23, characterized in that the endless screw is driven in rotation by a hydraulic motor (33) associated with a hydraulic distributor (34), that the hydraulic circuit composed by the motor (33) and the distributor (34) is disposed in series with the hydraulic circuit supplying the jack (5) and that said distributor (34) is shunted by two jets (35) and (36).

## Patentansprüche

1. Verfahren zur Volumendosierung einer Menge einer abzugebenden pastigen Masse, bei dem eine Maschine zur Abgabe einer pastigen Masse wie einer Nährpaste in dosierter Menge verwendet wird, die einen Vorrat (1) an der in dosierter Ration abzugebenden Paste sowie wenigstens eine Saug- und Druckpumpe (2) aufweist, die aus einer zylindrischen Kammer (4) besteht, in der ein Kolben (3) gleitend gelagert ist, der von einem Motororgan (5) zwischen einem hinteren und einem vorderen Totpunkt betätigt wird, wobei die Kammer (4) mit einer Einlaßöffnung (6), die über eine Einlaßleitung mit der Öffnung zur Entleerung des Pastenvorrats (1) verbunden ist, sowie mit einer Anstauöffnung (7) versehen ist, die über eine Druckleitung (9) mit einem Ansatz (10) zur Abgabe einer dosierten Pastenration verbunden ist, wobei die Öffnungen (6, 7) oder die Leitungen jeweils einem Verschlußmittel zugeordnet sind, das auf Befehl eine geschlossene Position, in der der Durchgangsquerschnitt für die pastige Masse verschlossen ist, sowie eine geöffnete Position einnehmen kann, in der der Querschnitt freigegeben ist, dadurch gekennzeichnet, daß es darin besteht, daß nach dem Verschließen der Anstauöffnung (7) oder der zugeordneten Leitung und dem Einlaß der Paste in die Kammer (4) der Pumpe, wobei der Kolben (3) dann in Entsprechung zu seinem hinteren Totpunkt angeordnet ist,
- die Einlaßöffnung (6) oder ihre zugehörige Leitung durch Einwirkung auf das entsprechende Verschlußmittel verschlossen wird;
- die Paste durch die vom Kolben (3) auf sie ausgeübte Schubkraft in der Kammer (4) der Pumpe fortschreitend vorverdichtet wird, um einen Vorverdichtungswert einzuhalten, der gleich einem Einstellwert ist, ab dem die Paste die Kammer (4) der Pumpe völlig füllt und weder in der Kammer noch in der Pastenmasse ein Hohlraum vorhanden ist;
- die Anstauöffnung (7) oder die zugeordnete Leitung durch Einwirkung auf das entsprechende Verschlußmittel geöffnet wird, nachdem der Wert der Vorverdichtung den Einstellwert erreicht hat;
- die Paste durch eine Bewegung des Kolbens (3) zu seinem vorderen Totpunkt zu dem Abgabeansatz (10) angestaut und gleichzeitig das angestaute Materialvolumen gemessen wird, und daß der Wert dieser Messung mit einem Einstellwert verglichen wird, der für den Volumenwert der abzugebenden Nährration steht;
- die Anstauöffnung (7) oder die zugeordnete Leitung durch Einwirkung auf das entsprechende Verschlußmittel (8) verschlossen und gleichzeitig die Bewegung des Kolbens (3) unterbrochen wird, sobald der Wert der Messung des Volumens der abgegebenen Menge gleich dem Einstellwert ist, der für den Volumenwert der abzugebenden Nährration steht.

2. Dosierverfahren nach Anspruch 1, dadurch gekennzeichnet, daß die Messung der angestauten Menge über die Messung des Wertes der Verschiebung des Kolbens (3) in Anstaurichtung durchgeführt wird.

3. Dosierverfahren nach Anspruch 1, dadurch gekennzeichnet, daß die Kammer der Pumpe vor dem Einbringen der pastigen Masse unter Unterdruck gesetzt wird, wobei dies durch den Rücklauf des Kolbens (3) nach dem Verschluß der Einlaß- und Anstauöffnung durch Einwirkung auf die entsprechenden Verschlußmittel durchgeführt wird.

4. Dosierverfahren nach Anspruch 1, dadurch gekennzeichnet, daß die Bewegung des Kolbens (3) zu seinem vorderen Totpunkt unterbrochen wird, wenn der Wert der Vorverdichtung den Einstellwert erreicht, und unmittelbar nach dem Verschluß der Anstauöffnung oder der zugeordneten Leitung wieder aufgenommen wird, wobei das Öffnen durch Einwirkung auf das entsprechende Verschlußmittel durchgeführt wird.

5. Dosierverfahren nach einem der Ansprüche 1 bis 4, dadurch gekennzeichnet, daß die Bewegung des Kolbens (3) in Anstaurichtung zunächst mit einer hohen Geschwindigkeit und dann mit einer niedrigen Geschwindigkeit stattfindet.

6. Dosierverfahren nach Anspruch 5, dadurch gekennzeichnet, daß der Kolben (3) mit einer hohen Geschwindigkeit angetrieben wird, solange der Wert der Volumenmessung der angestauten pastigen Masse unter einem Einstellwert liegt, der für den Volumenwert der Nährration steht, die bei der vorhergehenden Stopfoperation an die Schwimmvögel abgegeben wurde.

7. Maschine zur Abgabe einer dosierten Menge einer pastigen Masse wie beispielsweise einer Nährration zum Stopfen von Schwimmvögeln, die das Verfahren nach den Ansprüchen 1 bis 6 anwendet und einen Vorrat (1) an der in dosierter Ration abzugebenden Paste sowie wenigstens eine Saug- und Druckpumpe (2) aufweist, die aus einer zylindrischen Kammer (4) besteht, in der ein Kolben (3) gleitend gelagert ist, der von einem Motororgan (5) zwischen einem hinteren und einem vorderen Totpunkt betätigt wird, wobei die Kammer (4) mit einer Einlaßöffnung (6), die über eine Einlaßleitung mit der Öffnung zur Entleerung des Pastenvorrats (1) verbunden ist, sowie mit einer Anstauöffnung versehen ist, die über eine Druckleitung (9) mit einem Ansatz (10) zur Abgabe einer dosierten Pastenration verbunden ist, wobei die Öffnungen oder die Leitungen jeweils einem Verschlußmittel zugeordnet sind, das auf Befehl eine geschlossene Position, in der der Durchgangsquerschnitt für die pastige Masse verschlossen ist, sowie eine geöffnete Position einnehmen kann, in der der Querschnitt freigegeben ist, dadurch gekennzeichnet, daß es folgendes aufweist:
- ein Mittel (11) zum Messen der Verschiebung des Kolbens (3) der Pumpe in Anstaurichtung, das mit einem Abstandszähler (12) ausgestattet ist,
- ein Organ (13) zur Druckerfassung, das gegenüber dem Druck empfindlich ist, der bei der Vorverdichtung vom Kolben (3) auf die Paste ausgeübt wird, wobei das Organ zur Druckerfassung ein Signal zur Nullung des Zählers (12) abgibt, wenn der Wert der Vorverdichtung gleich dem vorher gewählten Einstellwert ist,
- einen Komparator (14) zum kontinuierlichen Vergleich des von dem Zähler (12) gemessenen Abstandswertes mit einem vorher gewählten Einstellwert, der für den Volumenwert der abzugebenden Dosis steht, wobei der Komparator (14) ein Signal liefert, wenn der Wert des gemessenen Abstands gleich dem Einstellwert ist, wobei das Signal an Steuermittel (15) geliefert wird, die das Motororgan für den Kolben (3) der Pumpe aktivieren oder deaktivieren.

8. Maschine zur Abgabe einer dosierten Menge einer pastigen Masse nach Anspruch 7, dadurch gekennzeichnet, daß der Komparator (14) kontinuierlich den von dem Zähler (12) gemessenen Wert des Abstands mit einem zweiten, vorher gewählten Einstellwert vergleicht, der für den Volumenwert der bei einem vorhergehenden Stopfen an den Schwimmvogel abgegebenen Nährration steht, wobei der Komparator (14) an das Steuermittel (15) ein Signal liefert, wenn der gemessene Wert gleich dem Einstellwert ist, und wobei das Steuermittel (15) auf das Motororgan für den Kolben (3) der Pumpe wirkt, um die Verschiebungsgeschwindigkeit des Kolbens (3) zu reduzieren.

9. Maschine zur Abgabe einer dosierten Menge einer pastigen Masse nach Anspruch 7 oder 8, dadurch gekennzeichnet, daß das Mittel zum Messen der Verschiebung des Kolbens (3) in der Anstaurichtung der pastigen Masse eine in Lagern (18) axial, parallel zur Verschiebungsrichtung des Kolbens (3) geführte Stange (17) umfaßt, wobei die Stange (17) mit dem Kolben (3) derart verbunden ist, daß sie durch diesen in Translation angetrieben wird, und wobei die Stange (17) einen radialen Finger (19) aufweist, der an einem Ende eines Endlosbandes (20) befestigt ist, das zweischen zwei Riemenscheiben (21) gespannt ist, von denen eine mit dem Abstandszähler (12) in Eingriff steht, der durch einen Inkrementalcodierer gebildet ist.

10. Maschine zur Abgabe einer dosierten Menge einer pastigen Masse nach Anspruch 7, bei der die Saug- und Druckpumpe eine zylindrische Kammer (4) aufweist, die durch ein zylindrisches Gehäuse abgegrenzt ist, das am vorderen Ende durch eine Querwand verschlossen ist, in der die Anstauöffnung vorgesehen ist, dadurch gekennzeichnet, daß die Einlaßöffnung (6) in dem zylindrischen Gehäuse radial zu der Kammer (4) und im Abstand von der Querwand vorgesehen ist.

11. Maschine zur Abgabe einer dosierten Menge einer pastigen Masse nach Anspruch 7, dadurch gekennzeichnet, daß die Kammer (4) wenigstens über einen Abschnitt ihrer Länge, der sich beiderseits der Einlaßöffnung (6) erstreckt, eine Bohrung aufweist, die mit geringen Herstellungstoleranzen bearbeitet ist, und daß das Funktionsspiel zwischen der Bohrung und dem Kolben (3) so reduziert wie möglich ist, um den Durchtritt der Paste zu verhindern, aber ausreichend groß ist, um den Durchtritt von Luft zu ermöglichen.

12. Maschine zur Abgabe einer dosierten Menge einer pastigen Masse nach Anspruch 11, dadurch gekennzeichnet, daß die Bohrung in einem Ring (16) vorgesehen ist.

13. Maschine zur Abgabe einer dosierten Menge einer pastigen Masse nach Anspruch 10, dadurch gekennzeichnet, daß der Rand der radialen Einlaßöffnung (6) in der Kammer (4) umgekantet ist.

14. Maschine zur Abgabe einer dosierten Menge einer pastigen Masse nach Anspruch 10, dadurch gekennzeichnet, daß das Mittel zum Verschluß der Einlaßöffnung (6) durch den Kolben (3) der Pumpe (2) gebildet ist, wobei der Kolben (3) in Entsprechung zu seinem hinteren Totpunkt hinter der Einlaßöffnung (6) angeordnet ist, um diese freizugeben.

15. Maschine zur Abgabe einer dosierten Menge einer pastigen Masse nach einem der Ansprüche 7 bis 14, dadurch gekennzeichnet, daß das Motororgan (5) zur Betätigung des Kolbens (3) zwischen seinem vorderen und hinteren Totpunkt ein Hydraulik-, Hochdruck-, Doppelstangen-, Doppelwirkungszylinder ist, der eine vordere und eine hintere Kammer aufweist, die alle beide mit einem Hochdruckhydraulikkreis verbunden sind, wobei eine der Stangen des Zylinders, nämlich diejenige, die sich in seiner vorderen Kammer befindet, den Kolben (3) der Pumpe (2) bildet und der Zylinder im hinteren Teil der Pumpe (2) in Festlegung gegen das zylindrische Gehäuse ihrer Kammer angeordnet ist, wobei die vordere Kammer (4) des Zylinders derart versorgt wird, daß sie die Rücklaufbewegung des Kolbens (3) der Pumpe hervorruft, und die hintere Kammer des Zylinders derart versorgt wird, daß sie die Vorverdichtung und die Bewegung des Kolbens (3) der Pumpe in Anstaurichtung hervorruft.

16. Maschine zur Abgabe einer dosierten Menge einer pastigen Masse nach den Ansprüchen 7 und 15, dadurch gekennzeichnet, daß das Druckerfassungsorgan (13) ein Druckregler ist, der der hinteren Kammer des Zylinders (5) oder der Versorgungsleitung für die Kammer zugeordnet ist, wobei der Druckregler an den Abstandszähler (12) ein elektrisches Nullungssignal liefert, sobald der Wert des Hydraulikdrucks in der hinteren Kammer des Zylinders (5) gleich seinem Nulleinstellungswert ist.

17. Maschine zur Abgabe einer dosierten Menge einer pastigen Masse nach den Ansprüchen 7 und 15, dadurch gekennzeichnet, daß das Mittel zum Verschluß der Anstauöffnung der Pumpe einen mit einer Bohrung versehenen Körper aufweist, in die zwei Öffnungen münden, von denen eine, die erste, mit der Anstauöffnung der Pumpe und die andere mit der Anstauleitung verbunden ist, wobei die Bohrung gleitend einen Kolben (27) aufnimmt, der eine Verschlußposition, nach der wenigstens die zweite Öffnung verschlossen ist, und eine Position zur Freigabe der Öffnungen einnehmen kann, wobei der Kolben (3) mit der Bohrung eine Kammer (28) bildet, die durch eine Hydraulikleitung über ein Rückschlagventil (29) derart mit der Versorgungsleitung für die vordere Kammer des Zylinders verbunden ist, daß bei der Versorgung der vorderen Kammer des Zylinders (5) unter Druck stehendes Öl durch das Rückschlagventil in die Kammer (28) des Verschlußmittels (28) eingespritzt wird, und daß der Kolben (27) wenigstens die zweite radiale Öffnung verschließt.

18. Maschine zur Abgabe einer dosierten Menge einer pastigen Masse nach Anspruch 17, dadurch gekennzeichnet, daß die beiden radialen Öffnungen des Verschlußmittels (8) bezüglich der Bohrung axial versetzt sind, und daß der Kolben (3) in der Verschlußposition nur die zweite radiale Öffnung verschließt.

19. Maschine zur Abgabe einer dosierten Menge einer pastigen Masse nach den Ansprüchen 16 und 18, dadurch gekennzeichnet, daß ein mit der Versorgungsleitung für die Kammer (28) des Verschlußmittels (8) verbundender Druckbegrenzer (31) parallel zu dem Rückschlagventil (29) angeordnet ist, wobei die Freigabe der zweiten Öffnung durch den Rücklauf des Kolbens (27) unter der Wirkung der Schubkraft der in der Kammer der Pumpe angestauten Paste durchgeführt wird, wobei diese Rücklaufbewegung stattfindet, wenn der von der Paste auf den Kolben (27) ausgeübte Druck über dem Nulleinstellungsdruck des Druckbegrenzers (31) liegt, wobei der Nulleinstellungsdruck über dem Nulleinstellungsdruck des Druckreglers (13) liegt, um bei der Vorverdichtung der Paste den Rücklauf des Kolbens (27) zu untersagen.

20. Maschine zur Abgabe einer dosierten Menge einer pastigen Masse nach Anspruch 18, gekennzeichnet durch ein Elektroventil, das mit der Versorgungsleitung für die Kammer (28) des Verschlußmittels verbunden und parallel zu dem Rückschlagventil (29) angeordnet ist, wobei das Elektroventil durch das Steuermittel (15) elektrisch gesteuert wird.

21. Maschine zur Abgabe einer dosierten Menge einer pastigen Masse nach Anspruch 19, dadurch gekennzeichnet, daß die zweite Öffnung des Verschlußmittels (8) bezüglich der Achse der Bohrung schräg liegt, während die erste zu der Bohrung senkrecht liegt.

22. Maschine zur Abgabe einer dosierten Menge einer pastigen Masse nach Anspruch 7, gekennzeichnet durch ein Mittel zum Drücken der Paste des Vorrats (1) zu der Kammer (4) der Dosierpumpe (2), um die Paste in Kombination mit dem in der Kammer (4) herrschenden Unterdruck rasch in die Kammer (4) einzubringen.

23. Maschine zur Abgabe einer dosierten Menge einer pastigen Masse nach Anspruch 22, dadurch gekennzeichnet, daß das Schubmittel durch eine motorisierte Endlosschraube (32) eines Mischsystems gebildet ist, mit dem der Pastenvorrat (1) ausgestattet ist.

24. Maschine zur Abgabe einer dosierten Menge einer pastigen Masse nach Anspruch 22, dadurch gekennzeichnet, daß das Schubmittel durch ein unter Druck stehendes Gasvolumen gebildet ist, das in dem Vorrat (1) über der Paste eingeschlossen ist.

25. Maschine zur Abgabe einer dosierten Menge einer pastigen Masse nach Anspruch 23, dadurch gekennzeichnet, daß die Endlosschraube durch einen Hydraulikmotor (33) angetrieben wird, der einem Hydraulikverteiler (34) zugeordnet ist, daß der Hydraulikkreis aus dem Motor (33) und dem Verteiler (34) in Reihe mit dem Hydraulikkreis zur Versorgung des Zylinders (5) angeordnet ist, und daß der Verteiler (34) durch zwei Düsen (35) und (36) überbrückt wird.
